Europäisches Patentamt

European Patent Office

Office européen des brevets

(11) Veröffentlichungsnummer: **0 387 590 B1**

(12) **EUROPÄISCHE PATENTSCHRIFT**

(45) Veröffentlichungstag der Patentschrift: **27.07.94**

(21) Anmeldenummer: **90103744.0**

(22) Anmeldetag: **26.02.90**

(51) Int. Cl.⁵: **C08L 75/04**, //(C08L75/04, 51:04)

(54) Schlagzäh modifizierte thermoplastische Polyurethan-Formmassen, Verfahren zu ihre Herstellung und ihre Verwendung.

(30) Priorität: **14.03.89 DE 3908237**

(43) Veröffentlichungstag der Anmeldung:
**19.09.90 Patentblatt 90/38**

(45) Bekanntmachung des Hinweises auf die
Patenterteilung:
**27.07.94 Patentblatt 94/30**

(84) Benannte Vertragsstaaten:
**AT BE CH DE ES FR GB IT LI NL SE**

(56) Entgegenhaltungen:
**DE-A- 2 436 258**
**DE-A- 2 854 407**

(73) Patentinhaber: **BASF Aktiengesellschaft**
**Carl-Bosch-Strasse 38**
**D-67063 Ludwigshafen(DE)**

(72) Erfinder: **Lausberg, Dietrich, Dr.**
**Nachtigalstrasse 32 a**
**D-6700 Ludwigshafen(DE)**
Erfinder: **Braun, Hans-Georg Dr.**
**Weinbergerstrasse 6**
**D-6718 Gruenstadt(DE)**
Erfinder: **Streu, Joachim, Dr.**
**Grellestrasse 24**
**D-2840 Diepholz(DE)**
Erfinder: **Faehndrich, Knud**
**Lohneufer 14**
**D-2840 Diepholz(DE)**

# EP 0 387 590 B1

**Beschreibung**

Die vorliegende Erfindung betrifft schlagzäh modifizierte Formmassen aus

(A) mindestens einem thermoplastischen Polyurethan, abgekürzt im folgenden TPU genannt, und

(B) mindestens einem auf besondere weise aufgebauten Pfropfkautschuk.

Formmassen aus Polyurethan (PU)-Elastomeren und Pfropfkautschuken sind bekannt. Bekannt ist ferner, daß sich die Kälteflexibilität von TPU durch Modifizierung mit einem Pfropfkautschuk verbessern läßt.

Die US-A-3 049 505 beschreibt z.B. eine Formmasse aus einem vernetzten, festen PU-Elastomeren und ABS-Kautschuken, deren Pfropfauflage aus polymerisierten Styrol-Acrylnitril-Einheiten besteht und die einen Pfropfgrad von größer als 40 aufweisen. Nach Angaben der DE-A-2 854 407 (US-A-4 317 890) bestehen thermoplastische Formmassen aus (A) 75 bis 97 Gew.% eines TPU und (B) 25 bis 3 Gew.% eines Pfropfpolymerisats, wobei dieses aufgebaut ist aus (Ba) 5 bis 35 Gew.%, bezogen auf (B), eines oder mehrerer Pfropfmonomeren und (Bb) 65 bis 95 Gew.%, bezogen auf (B), einer als Pfropfgrundlage dienenden Elastomerkomponente mit einer Einfriertemperatur kleiner als -30°C und wobei das gesamte Pfropfpolymerisat (B) weniger als 50 Gew.% an den Monomeren Styrol, $\alpha$-Methylstyrol und Acrylnitril enthält, die Pfropfauflage bevorzugt aus Styrol und Acrylnitril im Gewichtsverhältnis von 9:1 bis 1:1 besteht und der Pfropfgrad 5 bis 35 beträgt. Die erhaltenen Formmassen zeigen bei tiefen Temperaturen eine unbefriedigende Schlagzähigkeit und sind nicht frei von Segregationserscheinungen, dem sogenannten Perlmutteffekt. Durch die Segregation wird außerdem die mechanische Festigkeit der Formmassen reduziert.

Zur Vermeidung des Perlmutteffekts werden gemäß EP-A-0 152 049 (CA-A-1 231 488) ABS-Pfropfkautschuke mit einer Pfropfauflage aus Styrol und Acrylnitril im Gewichtsverhältnis von 90:10 bis 50:50 und einem Pfropfgrad von 50 bis 70 gemischt mit einem speziell aufgebauten TPU niedriger Dichte und einer Härte nach Shore D von 55 bis 80, hergestellt aus ausgewählten Aufbaukomponenten, insbesondere aus Polytetramethylenether-glykolund einem Gemisch aus Haupt- und Cokettenverlängerungsmitteln im Molverhältnis von 97:3 bis 72:28, wobei als Hauptkettenverlängerungsmittel Butandiol-1,4 oder Hexandiol-1,6 und als Cokettenverlängerungsmittel vorzugsweise Hexandiol-1,6, Butandiol-1,4, Diethylenglykol, Di- und Tripropylenglykol oder Hydrochinon-di-($\beta$-hydroxyethylether) in Betracht kommen.

Aber auch durch diese Maßnahmen konnte die Kälteschlagzähigkeit der Formmassen, insbesondere bei Temperaturen von -30°C und tiefer, nicht entscheidend verbessert werden.

Die Aufgabe der vorliegenden Erfindung bestand somit insbesondere darin, Formmassen aus TPU mit einer verbesserten Kälteschlagzähigkeit zur Verfügung zu stellen.

Gegenstand der Erfindung sind somit schlagzäh modifizierte thermoplastische Polyurethan-Formmassen, die bestehen aus

A) 70 bis 99 Gew.-Teilen, vorzugsweise 75 bis 90 Gew.-Teilen, mindestens eines thermoplastischen Polyurethan-Elastomeren (A),

B) 1 bis 30 Gew.-Teilen, vorzugsweise 10 bis 25 Gew.-Teilen, mindestens eines Pfropfpolymerisats (B), das seinerseits aufgebaut ist aus

B1) einem als Pfropfgrundlage dienenden Elastomeren (B1) aus einem Butadien-1,3-Homopolymerisat oder -Copolymerisat mit einer Glastemperatur von unter -40°C und

B2) einer Pfropfauflage (B2), die entweder einstufig aus einem Copolymerisat von $\alpha$-Methylstyrol und Acrylnitril oder $\alpha$-Methylstyrol, Styrol und Acrylnitril oder aber zweistufig aufgebaut ist aus

1) einem Styrol-Homopolymerisat und

2) einem $\alpha$-Methylstyrol-Acrylnitril-Copolymerisat,

wobei sich die Gew.-Teile von (A) und (B) zu 100 Gew.-Teilen ergänzen und

C) 0 bis 60 Gew.%, vorzugsweise 0 bis 40 Gew.%, bezogen auf das Gesamtgewicht von (A) und (B), mindestens eines Zusatzstoffes

und dadurch gekennzeichnet sind, daß in der Pfropfauflage (B2)

i) die Gewichtsmenge an polymerisierten $\alpha$-Methylstyroleinheiten größer ist als die der polymerisierten Styroleinheiten,

ii) das Gewichtsverhältnis der polymerisierten $\alpha$-Methylstyroleinheitenoder der Summe aus polymerisierten $\alpha$-Methylstyrol- und Styroleinheiten zu polymerisierten Acrylnitrileinheiten von 60:40 bis 90:10, vorzugsweise von 65:35 bis 80:20 beträgt und

iii) der Pfropfgrad zwischen 15 und 30, vorzugsweise zwischen 20 und 30 liegt.

Gegenstände der Erfindung sind ferner ein Verfahren zur Herstellung der schlagzäh modifizierten thermoplastischen Polyurethan-Formmassen durch Zusammenschmelzen der Komponenten (A) und (B) und gegebenenfalls Einbringen der Komponente (C) in einer üblichen Mischvorrichtung, vorzugsweise in einem

2

Extruder, bei einer Temperatur im Bereich von 160 bis 250°C und einer Verweilzeit von 0,5 bis 10 Minuten und die Verwendung der schlagzäh modifizierten thermoplastischen Polyurethan-Formmassen zur Herstellung von Spritzgußformteilen, insbesondere Skistiefeln und Kraftfahrzeugaußenteilen sowie Formkörper, hergestellt unter Verwendung der schlagzäh modifizierten Polyurethan-Formmassen als wesentlicher Aufbaukomponente.

Durch den Einsatz der Pfropfpolymerisate (B), deren Pfropfauflage (B2) erfindungsgemäß aus einem α-Methylstyrol-Acrylnitrilcopolymerisat oder einem α-Methylstyrol-Styrol-Acrylnitrilcopolymerisat besteht, werden überraschenderweise TPU-Formmassen erhalten mit wesentlich verbesserter Schlagzähigkeit bei hoher Steifigkeit, insbesondere bei tiefen Temperaturen. Vorteilhaft ist ferner, daß weder in der Schmelze noch im Formkörper eine Entmischung der Aufbaukomponenten TPU (A) und Pfropfpolymerisat (B) eintritt und die erfindungsgemäßen Formmassen auf einfache Weise zu Formkörpern mit einer sehr guten Oberflächenbeschaffenheit verarbeitet werden können.

Die erfindungsgemäß verwendbaren TPU (A) entsprechen dem Stand der Technik und können hergestellt werden durch Umsetzung von

a) organischen, vorzugsweise aromatischen Diisocyanaten, insbesondere 4,4'-Diphenylmethan-diisocyanat, mit

b) Polyhydroxylverbindungen, vorzugsweise im wesentlichen linearen Polyhydroxylverbindungen mit Molekulargewichten von 500 bis 8000, insbesondere Polyalkylenglykolpolyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 8000 und

c) Diolen als Kettenverlängerungsmitteln mit Molekulargewichten von 60 bis 400, insbesondere Butandiol-1,4

in Gegenwart von

d) Katalysatoren und gegebenenfalls

e) Hilfsmitteln und/oder

f) Zusatzstoffen

bei erhöhten Temperaturen.

Zu den Aufbaukomponenten (a) bis (d) und gegebenenfalls (e) und/oder (f) ist folgendes auszuführen:

a) als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanatsowie die entsprechenden Isomerengemische, 4,4'-, 2,4'- und 2,2'-Dicyclohexyl-methan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat,4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat.

Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.

Als geeignete monofunktionelle Verbindungen mit reaktivem Wasserstoffatom, die auch als Molekulargewichtsregler verwendbar sind, seien z.B. genannt Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkyl-alkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäuremono- und/oder -diester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-($\beta$-hydroxyethyl)-hydrochinon sowie Polytetramethylenglykole mit Molekulargewichten von 162 bis 378.

Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung der TPU (A) werden die im wesentlichen difunktionellen Polyhydroxylverbindungen (b) und Diolen (c) vorteilhafterweise in Molverhältnissen von 1:3 bis 1:12, vorzugsweise von 1:6 bis 1:12 verwendet, so daß die resultierenden TPU's eine Härte nach Shore D von 40 bis 80, vorzugsweise von 40 bis 75 besitzen.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Hilfsmittel (e) und/oder Zusatzstoffe (f) können hierzu, wie bereits ausgeführt wurde, in die Aufbaukomponenten oder in die Reaktionsmischung zur Herstellung der TPU (A) eingebracht werden. Nach einer anderen Verfahrensvariante können die Hilfsmittel (e) und/oder Zusatzstoffe (f), die mit dem Zusatzstoff (C) identisch sein können, jedoch mit dem TPU (A) und/oder Pfropfpolymerisat (B) gemischt und anschließend verschmolzen werden oder sie werden direkt der Schmelze aus den Komponenten (A) und (B) einverleibt. Die zuletzt genannte Methode findet insbesondere Anwendung zum Einbringen von verstärkend wirkenden Füllstoffen als Zusatzstoff (C).

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 0,80 bis 1,20:1, vorzugsweise 0,95 bis 1,05:1 und insbesondere ungefähr 1:1 beträgt.

Die erfindungsgemäß verwendbaren TPU (A), die üblicherweise 8 bis 20 Gew.%, vorzugsweise 8 bis 16 Gew.%, bezogen auf das Gesamtgewicht, Urethangruppen gebunden enthalten und einen Schmelzindex bei 210°C von 500 bis 1, vorzugsweise 100 bis 1 aufweisen, können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein das erhaltene TPU (A) vor der Weiterverarbeitung zu den erfindungsgemäßen TPU-Formmassen bei 80 bis 120°C, vorzugsweise 100 bis 110°C über einen Zeitraum von 1 bis 24 Stunden zu tempern.

Die TPU (A) werden, wie bereits ausgeführt wurde, bevorzugt nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponente (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden TPU (A) mit einer sehr niedrigen Schmelzviskosität bzw. einem hohen Schmelzindex erhalten.

Als Aufbaukomponente (B) enthalten die erfindungsgemäßen TPU-Formmassen, wie bereits dargelegt wurde, 1 bis 30 Gew.-Teile, vorzugsweise 10 bis 25 Gew.-Teile, bezogen auf 100 Gew.-Teile (A) und (B), eines oder mehrerer, vorzugsweise eines kautschukelastischen Pfropfpolymerisats (B), das erfindungsgemäß besteht aus

B1) vorzugsweise 70 bis 85 Gew.%, insbesondere 70 bis 80 Gew.%, bezogen auf das Gewicht von (B), einer kautschukelastischen Pfropfgrundlage (B1) aus einem Butadien-homo- oder -copolymeren mit einer Glastemperatur von unter -40°C, vorzugsweise unter -50°C und

B2) vorzugsweise 30 bis 15 Gew.%, insbesondere 30 bis 20 Gew.%, bezogen auf das Gewicht von (B), einer ein- oder zweistufig hergestellten Pfropfauflage (B2) aus $\alpha$-Methylstyrol und Acrylnitril oder $\alpha$-Methylstyrol, Styrol und Acrylnitril.

Die Pfropfgrundlage (B1) besteht erfindungsgemäß aus einem Butadien-1,3-homopolymerisat oder -copolymerisat, wobei das Copolymerisat bis zu 30 Gew.%, vorzugsweise bis zu 20 Gew.%, bezogen auf das Gewicht von B1, polymerisierte Einheiten von olefinisch ungesättigten Monomeren aus der Gruppe Isopren, Styrol, Acrylsäure- oder Methacrylsäurealkylestern mit 1 bis 8, vorzugsweise 1 bis 6 C-Atomen gebunden enthalten kann. Die Pfropfgrundlage ist vorzugsweise zumindest teilweise vernetzt. Zur Erhöhung des Vernetzungsgrades können außer den vorgenannten Dienen auch andere vernetzend wirkenden Monomeren, wie z.B. Triallylcyanurat, Triallylisocyanurat, Triacryloylhexahydro-5-triazin und Trialkylenbenzol, eingesetzt werden.

Falls die vernetzend wirkenden Monomeren mehr als 2 polymerisierbare Doppelbindungen aufweisen, ist es zweckmäßig, ihre Menge auf weniger als 1 Gew.%, bezogen auf das Gewicht der Pfropfgrundlage (B1), zu beschränken. Die Pfropfauflage (Pfropfhülle) (B2) kann ein- oder zweistufig aufgebaut sein. Bei einem zweistufigen Aufbau besteht die erste Stufe (1. Schale) vorzugsweise aus polymerisiertem Styrol und die zweite Stufe (2. Schale) aus einem $\alpha$-Methylstyrol-Acrylnitril-Copolymeren. Die einstufig hergestellte Pfropfauflage besteht hingegen aus einem $\alpha$-Methylstyrol-Acrylnitril- oder $\alpha$-Methylstyrol-Styrol-Acrylnitril-Copolymerisat, wobei erfindungswesentlich ist, daß

i) die Gewichtsmenge an polymerisierten $\alpha$-Methylstyroleinheiten größer ist als die an polymerisierten Styroleinheiten, die auch den Wert Null haben kann, und

ii) das Gewichtsverhältnis der polymerisierten $\alpha$-Methylstyroleinheitenoder der Summe aus polymerisierten $\alpha$-Methylstyrol- und Styroleinheiten zu polymerisierten Acrylnitrileinheiten von 60:40 bis 90:10, vorzugsweise von 65:35 bis 80:20 beträgt.

Der Pfropfgrad, erfindungsgemäß definiert als der Gewichtsanteil der Pfropfauflage (B2) an der Gesamtmasse des Pfropfpolymerisats B, multipliziert mit 100, liegt zwischen 15 und 30, vorzugsweise zwischen 20 und 30.

Die Pfropfausbeute, d.h. der Quotient aus der Menge des aufgepfropften Monomeren und der Menge des eingesetzten Pfropfmonomeren liegt im allgemeinen im Bereich von 20 bis 90 %, vorzugsweise von 50 bis 90 %.

Die mittlere Teilchengröße $d_{50}$ des kautschukelastischen Pfropfpolymerisats B, die definiert ist als der Teilchendurchmesser bei dem gerade 50 % der Teilchen größer sind, liegt zwischen 80 und 300 nm, vorzugsweise zwischen 90 und 250 nm.

Die Herstellung des erfindungsgemäß verwendbaren Pfropfpolymerisats B erfolgt in an sich bekannter Weise durch Emulsionspolymerisation, z.B. analog den in den DE-A-2 035 390, DE-A-2 248 242 und insbesondere der EP-A-22 216 offenbarten Herstellungsvorschriften.

Neben den erfindungswesentlichen Komponenten TPU (A) und kautschukelastischen Pfropfpolymerisaten (B) können die erfindungsgemäßen TPU-Formmassen auch Zusatzstoffe (C) enthalten.

Wie bereits oben ausgeführt wurde, können die Zusatzstoffe (C) identisch sein mit üblichen zur Herstellung von TPU geeigneten Hilfsmitteln (e) oder Zusatzstoffen (f) und daher bereits in dem TPU (A) incorporiert sein. Der Anteil der Komponente (C) beträgt üblicherweise 0 bis 60 Gew.%, vorzugsweise 2 bis 50 Gew.% und insbesondere 5 bis 40 Gew.%, bezogen auf das Gewicht der Komponenten (A) und (B). Zusatzstoffe der genannten Art sind beispielsweise Füllstoffe, Verstärkungsmittel und Flammschutzmittel.

EP 0 387 590 B1

Als geeignete Füllstoffe kommen beispielsweise in Betracht: organische Füllstoffe wie z.B. Ruß, chlorierte Polyethylene und Melamin und anorganische Füllstoffe, wie z.B. Wollastonit, Calciumcarbonat, Magnesiumcarbonat, amorphe Kieselsäure, Calciumsilikat, Calciummetasilikat, Quarzmehl, Talkum, Kaolin, Glimmer, Feldspat, Glaskugeln, Si- oder Bornitrid sowie Mischungen dieser Füllstoffe.

Als Verstärkungsmittel besonders bewährt haben sich und daher vorzugsweise Anwendung finden Fasern, beispielsweise Kohlenfasern oder insbesondere Glasfasern, besonders dann, wenn eine hohe Wärmeformbeständigkeit gefordert wird, wobei die Fasern mit Haftvermittlern und/oder Schlichten ausgerüstet sein können. Geeignete Glasfasern, die z.B. auch in Form von Glasgeweben, -matten, -vliesen und/oder vorzugsweise Glasseidenrovings oder geschnittener Glasseide aus alkaliarmen E-Glasern mit einem Durchmesser von 5 bis 200 μm, vorzugsweise 6 bis 15 μm eingesetzt werden, weisen nach ihrer Einarbeitung in die TPU-Zusammensetzung im allgemeinen eine mittlere Faserlänge von 0,05 bis 1 mm, vorzugsweise von 0,1 bis 0,5 mm auf.

Als Flammschutzmittel seien z.B. genannt: Melamin, Polyhalogendiphenyl, Polyhalogendiphenylether, Polyhalogenphthalsäure und ihre Derivate, Polyhalogenoligo- und -Polycarbonate, wobei die entsprechenden Bromverbindungen besonders wirksam sind. Als Flammschutzmittel eignen sich auch Phosphorverbindungen, wie elementarer Phosphor oder organische Phosphorverbindungen. Außerdem enthalten die Flammschutzmittel in der Regel zusätzlich einen Synergisten, z.B. Antimontrioxid.

Wie bereits ausgeführt wurde, können den erfindungsgemäßen schlagzäh modifizierten TPU-Formmassen oder den hierfür geeigneten TPU (A) oder Pfropfpolymerisaten (B) Hilfsmittel und/oder Zusatzstoffe einverleibt werden. Sofern derartige Einsatzstoffe Anwendung finden, beträgt ihr Anteil, bezogen auf das Gesamtgewicht von (A) und (B) im allgemeinen bis zu 20 Gew.%, vorzugsweise bis zu 10 Gew.% und insbesondere 0,01 bis 5 Gew.%. Als derartige Zusatzstoffe seien beispielsweise genannt: Keimbildungsmittel, Oxidationsverzögerer, Stabilisatoren, Gleit- und Entformungshilfsmittel und Farbstoffe.

Als Keimbildungsmittel können z.B. Talkum, Calciumfluorid, Natriumphenylphosphinat, Aluminiumoxid und feinteiliges Polytetrafluorethylen in Mengen bis zu 5 Gew.%, bezogen auf das Gewicht von TPU (A) und Pfropfpolymerisat (B) eingesetzt werden.

Geeignete Oxidationsverzögerer und Wärmestabilisatoren, die den TPU-Formmassen zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.%, bezogen auf das Gewicht der Komponenten (A) und (B), verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.%, bezogen auf das Gewicht der Komponenten (A) und (B), eingesetzt werden.

Gleit- und Entformungsmittel, die in der Regel ebenfalls in Mengen bis zu 1 Gew.%, bezogen auf das Gewicht der Komponenten (A) und (B), zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Die erfindungsgemäßen schlagzäh modifizierten TPU-Formmassen können nach beliebigen bekannten Verfahren hergestellt werden, bei denen aus den TPU (A) und Pfropfpolymerisaten (B) und gegebenenfalls Zusatzstoffen (C) im wesentlichen homogene Zusammensetzungen erhalten werden. Beispielsweise können die Aufbaukomponenten (A), (B) und (C) bei Temperaturen von 0 bis 150°C, vorzugsweise 15 bis 30°C gemischt und anschließend verschmolzen werden oder die Komponenten können direkt in der Schmelze vermischt werden. Nach einer anderen Verfahrensvariante können (A) mit (C) oder (B) mit (C) gemischt werden und diese Mischungen in (B) bzw. (A) eingearbeitet werden.

Die Herstellung der erfindungsgemäßen TPU-Formmassen erfolgt bei Temperaturen im Bereich von 160 bis 250°C, vorzugsweise 210 bis 240°C und einer Verweilzeit von 0,5 bis 10 Minuten, vorzugsweise von 0,5 bis 3 Minuten in beispielsweise fließfähigem, erweichten oder vorzugsweise geschmolzenem Zustand der TPU (A) und Pfropfpolymerisate (B) z.B. durch Rühren, Walzen, Kneten oder vorzugsweise Extrudieren, beispielsweise unter Verwendung von üblichen Plastifizierungsvorrichtungen wie z.B. Brabender- oder Banbury-Mühlen, Knetern und Extrudern, vorzugsweise eines Doppelschnecken- oder Preßspritzmischextruders.

Nach dem zweckmäßigsten und daher vorzugsweise angewandten Herstellungsverfahren werden die TPU (A) und Pfropfpolymerisate (B) gemischt, bei Temperaturen von 160 bis 250°C, vorzugsweise in einem Extruder, zusammengeschmolzen, der Schmelze gegebenenfalls die Komponente (C) einverleibt und diese danach abkühlen gelassen und die erhaltenen TPU-Formmassen zerkleinert.

7

Nach einer weiteren bevorzugten Herstellungsvariante können die erfindungsgemäß geeigneten pulverisierten Pfropfpolymerisate (B) in mindestens einer der Aufbaukomponenten (a) bis (c) zur Herstellung des TPU (A), vorzugsweise der höhermolekularen Polyhydroxylverbindung (b), emulgiert oder dispergiert werden und diese Pfropfpolymerisate (B) haltigen Aufbaukomponenten danach in an sich bekannter Weise zu TPU-Formmassen umgesetzt werden.

Die erfindungsgemäßen TPU-Formmassen lassen sich leicht zu Formkörpern mit guter Oberflächenbeschaffenheit und verbesserter Schlagzähigkeit bei hoher Steifigkeit, insbesondere bei tiefen Temperaturen, verarbeiten, wobei weder in der Schmelze noch im Formkörper eine Entmischung in die Komponenten (A) und (B) eintritt.

Die TPU-Formmassen finden vorzugsweise Verwendung zur Herstellung von Formkörpern, insbesondere von Skistiefeln und großflächigen Spritzgußformteilen für Kraftfahrzeuge, vorzugsweise Automobilaußenteile wie z.B. Stoßfängern, Frontschürzen, Heckspoiler und Seitenstoßkanten. Sie eignen sich ferner für Formteile im Wageninnern, wie z.B. als Konsolenabdeckungen, Armlehnen und Griffen.

Beispiele

Zur Herstellung der erfindungsgemäßen, schlagzäh modifizierten TPU-Formmassen wurden folgende thermoplastische PU-Elastomeren (A) verwendet:

A1: TPU mit einer Härte nach Shore D von 74, das hergestellt wurde durch Umsetzung einer Mischung aus 0,5 Mol Butandiol-1,4-polyadipat mit einem Molekulargewicht von 2000 und 5,86 Mol Butandiol-1,4 mit 4,4'-Diphenylmethan-diisocyanat im Verhältnis von NCO-:OH-Gruppen von 1 bei Temperaturen im Bereich von 80 bis 170°C nach dem Bandverfahren.

A2: TPU mit einer Härte nach Shore D von 74, das hergestellt wurde analog den Angaben von A1, jedoch unter Verwendung eines Verhältnisses von NCO-:OH-Gruppen von 1,04.

A3: TPU mit einer Härte nach Shore D von 64, das hergestellt wurde analog den Angaben von A1, jedoch unter Verwendung von 3,87 Mol Butandiol-1,4.

A4: TPU mit einer Härte nach Shore A von 90, das hergestellt wurde analog den Angaben von A1, jedoch unter Verwendung von 1,7 Mol Butandiol-1,4.

A5: TPU mit einer Härte nach Shore D von 74, hergestellt durch Umsetzung einer Mischung aus 0,5 Mol Butandiol-1,4-Ethylenglykol-polyadipat mit einem Butandiol-1,4:Ethylenglykol-Molverhältnis von 1:1 und einem Molekulargewicht von 2000 und 5,66 Mol Butandiol-1,4 mit 4,4'-Diphenylmethan-diisocyanat im Verhältnis von NCO-:OH-Gruppen von 1.

Die beschriebenen TPU A1 bis A5 enthielten, bezogen auf das Alkandiol-polyadipatgewicht, 1 Gew.% Diisopropylphenylcarbodiimid als Hydrolysestabilisator.

A6: TPU mit einer Härte nach Shore D von 74, das hergestellt wurde durch Umsetzung einer Mischung aus 1 Mol Polytetramethylenglykol mit einem Molekulargewicht von 1000 und 5,9 Mol Butandiol-1,4 mit 4,4'-Diphenylmethan-diisocyanat im Verhältnis von NCO-:OH-Gruppen von 1 bei Temperaturen im Bereich von 90 bis 170°C nach dem Bandverfahren.

Als Pfropfpolymerisate fanden Verwendung:

BI: (Vergleichsprodukt)

Kautschukelastisches Pfropfpolymerisat mit einer Pfropfgrundlage (75 Gew.%) aus Polybutadien und einer Pfropfauflage (25 Gew.%) eines Copolymeren aus Styrol und Acrylnitril im Gewichtsverhältnis 75:25, hergestellt durch Emulsionspolymerisation in an sich bekannter Weise. Der mittlere Teilchendurchmesser $d_{50}$, der definiert ist als der Durchmesser, ober- und unterhalb dessen die Durchmesser von jeweils 50 % der Teilchen liegen, betrug 200 nm.

BII: Kautschukelastisches Pfropfpolymerisat, hergestellt analog BI, jedoch mit dem Unterschied, daß die Pfropfauflage aus einem Copolymeren aus $\alpha$-Methylstyrol und Acrylnitril im Gewichtsverhältnis 75:25 besteht.

BIII: Kautschukelastisches Pfropfpolymerisat mit einer Pfropfgrundlage (70 Gew.%) aus Polybutadien und einer zweistufig hergestellten Pfropfauflage (insgesamt 30 Gew.%), wobei die 1. Pfropfauflage (10 Gew.%) aus Polystyrol und die 2. Pfropfauflage (20 Gew.%) aus einem Copolymeren aus $\alpha$-Methylstyrol und Acrylnitril im Gewichtsverhältnis 70:30 bestehen. Das Pfropfpolymerisat, das durch Emulsionspolymerisation in an sich bekannter Weise hergestellt wurde, besaß einen mittleren Teilchendurchmesser $d_{50}$ von 150 nm.

Herstellung der schlagzäh modifizierten TPU-Formmassen

Beispiele 1 bis 10 und Vergleichsbeispiele I bis IV

Zur Herstellung der TPU-Formmassen wurden das TPU (A) und das Pfropfpolymerisat (B) bei einer Temperatur von 23 °C intensiv gemischt, die Mischung in einen Zweischneckenextruder eingebracht, bei 230 °C aufgeschmolzen, innerhalb eines Zeitraums von 2 Minuten bei derselben Temperatur homogenisiert und danach in ein Wasserbad extrudiert.

Nach der Granulierung und Trocknung wurde die TPU-Formmasse mit Hilfe einer Spritzgußmaschine bei 230 °C zu Prüfkörpern verformt, an denen, ohne weitere Nachbehandlung, die Kerbschlagzähigkeit nach DIN 53 453 und der Elastizitätsmodul nach DIN 53 457 gemessen wurde.

Die Art und Menge der verwendeten TPU (A) und Pfropfpolymerisate (B) und die an den Prüfkörpern gemessenen mechanischen Eigenschaften sind in der folgenden Tabelle zusammengefaßt.

Tabelle

| Beispiele | Einsatzstoffe | | | | mechanische Eigenschaften | | |
|---|---|---|---|---|---|---|---|
| | TPU (A) | | Pfropfpolymerisat (B) | | Kerbschlagzähigkeit [kJ/m²] | | Elastizitätsmodul [N/mm²] |
| | Menge [Gew.-Teile] | Art | Menge [Gew.-Teile] | Art | -30°C | -40°C | |
| 1 | 80 | A 1 | 20 | B 2 | 12 | 7 | 550 |
| 2 | 80 | A 2 | 20 | B 2 | 14 | 8 | 540 |
| 3 | 80 | A 3 | 20 | B 2 | 16 | 10 | 360 |
| 4 | 80 | A 4 | 20 | B 2 | o.Br.* | 23 | 30 |
| 5 | 80 | A 5 | 20 | B 2 | 10 | 5 | 580 |
| 6 | 80 | A 6 | 20 | B 2 | o.Br.* | 16 | 400 |
| 7 | 80 | A 1 | 20 | B 3 | 14 | 8 | 560 |
| 8 | 90 | A 1 | 10 | B 3 | 9 | 5 | 620 |
| 9 | 90 | A 4 | 10 | B 3 | o.Br.* | 15 | 35 |
| 10 | 95 | A 4 | 5 | B 3 | 21 | 12 | 40 |
| Vergleichs-beispiele | | | | | | | |
| I | 80 | A 1 | 20 | B 1 | 5 | 3 | 550 |
| II | 80 | A 2 | 20 | B 1 | 6 | 3 | 540 |
| III | 80 | A 3 | 20 | B 1 | 9 | 5 | 350 |
| IV | 80 | A 4 | 20 | B 1 | o.Br.* | 10 | 30 |

* ohne Bruch

## Patentansprüche

1. Schlagzäh modifizierte thermoplastische Polyurethan-Formmassen, bestehend aus
A) 70 bis 99 Gew.-Teilen mindestens eines thermoplastischen Polyurethan-Elastomeren (A),

10

B) 1 bis 30 Gew.-Teilen mindestens eines Pfropfpolymerisats (B), aufgebaut aus

B1) einem als Pfropfgrundlage dienenden Elastomeren (B1) aus einem Butadien-1,3-Homopolymerisat oder -Copolymerisat mit einer Glastemperatur von unter -40°C und

B2) einer Pfropfauflage (B2), die entweder einstufig aus einem Copolymerisat von α-Methylstyrol und Acrylnitril oder α-Methylstyrol, Styrol und Acrylnitril oder aber zweistufig aufgebaut ist aus

1) einem Styrol-Homopolymerisat und

2) einem α-Methylstyrol-Acrylnitril-Copolymerisat,

wobei sich die Gew.-Teile von (A) und (B) zu 100 Gew.-Teilen ergänzen und

C) 0 bis 60 Gew.%, bezogen auf das Gewicht von (A) und (B), mindestens eines Zusatzstoffes,

dadurch gekennzeichnet, daß in der Pfropfauflage (B2)

i) die Gewichtsmenge an polymerisierten α-Methylstyroleinheiten größer ist als die der polymerisierten Styroleinheiten,

ii) das Gewichtsverhältnis der polymerisierten α-Methylstyroleinheitenoder der Summe aus polymerisierten α-Methylstyrol- und Styroleinheiten zu polymerisierten Acrylnitrileinheiten von 60:40 bis 90:10 beträgt und

iii) der Pfropfgrad, definiert als der Gewichtsanteil der Pfropfauflage (B2) an der Gesamtmasse des Pfropfpolymerisats (B), multipliziert mit 100, zwischen 15 und 30 liegt.

2. Schlagzäh modifizierte thermoplastische Polyurethan-Formmassen nach Anspruch 1, dadurch gekennzeichnet, daß das Pfropfpolymerisat (B) besteht aus

B1) 70 bis 85 Gew.% einer kautschukelastischen Pfropfgrundlage (B1) und

B2) 30 bis 15 Gew.% der ein- oder zweistufig hergestellten Pfropfauflage (B2),

wobei die Gew.% bezogen sind auf das Gesamtgewicht von B1) und B2).

3. Schlagzäh modifizierte thermoplastische Polyurethan-Formmassen nach einem der Ansprüche 1 oder 2, dadurch gekennzeichnet, daß die kautschukelastische Pfropfgrundlage besteht aus einem Homopolymerisat aus Butadien-1,3 oder einem Copolymerisat aus Butadien-1,3 und mindestens einem olefinisch ungesättigten Monomeren aus der Gruppe Isopren, Styrol oder (Meth)acrylsäurealkylestern mit 1 bis 8 C-Atomen im Alkylrest.

4. Schlagzäh modifizierte thermoplastische Polyurethan-Formmassen nach einem der Ansprüche 1 bis 3, dadurch gekennzeichnet, daß die thermoplastischen Polyurethan-Elastomeren (A) hergestellt werden durch Umsetzung von

a) aromatischen Diisocyanaten mit

b) im wesentlichen linearen Polyhydroxylverbindungen mit einem Molekulargewicht von 500 bis 8000, und

c) Butandiol-1,4

in einem Äquivalenzverhältnis von NCO-Gruppen der organischen Diisocyanate (a) zur Summe der Hydroxylgruppen der Komponenten (b) und (c) von 0,3:1,0 bis 1,2:1,0.

5. Schlagzäh modifizierte thermoplastische Polyurethan-Formmassen nach einem der Ansprüche 1 bis 4, dadurch gekennzeichnet, daß die thermoplastischen Polyurethan-Elastomeren (A) eine Härte nach Shore D von 40 bis 80 besitzen und hergestellt werden nach dem Bandverfahren.

6. Verfahren zur Herstellung der schlagzäh modifizierten thermoplastischen Polyurethan-Formmassen nach einem der Ansprüche 1 bis 5 durch Zusammenschmelzen der Komponenten (A) und (B) sowie gegebenenfalls (C) in einer üblichen Mischvorrichtung bei einer Temperatur im Bereich von 160 bis 250°C und einer Verweilzeit von 0,5 bis 10 Minuten.

7. Verfahren zur Herstellung der schlagzäh modifizierten thermoplastischen Polyurethan-Formmassen nach einem der Ansprüche 1 bis 5, dadurch gekennzeichnet, daß man das Pfropfpolymerisat (B) in mindestens einer der Aufbaukomponenten (a) bis (c), vorzugsweise (b), zur Herstellung der thermoplastischen Polyurethan-Elastomeren emulgiert oder dispergiert und die auf diese Weise modifizierten Aufbaukomponenten (a) bis (c) in an sich bekannter Weise zur Reaktion bringt.

8. Verwendung der schlagzäh modifizierten thermoplastischen Polyurethan-Formmassen nach einem der Ansprüche 1 bis 5 zur Herstellung von Spritzgußformteilen.

9. Formkörper, hergestellt unter Verwendung von schlagzäh modifizierten Polyurethan-Formmassen nach einem der Ansprüche 1 bis 5 als wesentlicher Aufbaukomponente.

## Claims

1. A toughened thermoplastic polyurethane molding material consisting of
   A) from 70 to 99 parts by weight of at least one thermoplastic polyurethane elastomer (A),
   B) from 1 to 30 parts by weight of at least one graft polymer (B) composed of
      B1) an elastomer (B1) which serves as the grafting base and comprises 1,3-butadiene homopolymer or copolymer having a glass transition temperature below -40 °C and
      B2) a graft (B2) which is produced either in one stage from a copolymer of $\alpha$-methylstyrene and acrylonitrile or $\alpha$-methylstyrene, styrene and acrylonitrile or in two stages from
         1) a styrene homopolymer and
         2) an $\alpha$-methylstyrene and/or acrylonitrile copolymer,
      the parts by weight of (A) and (B) summing to 100 parts by weight, and
   C) from 0 to 60% by weight, based on the weight of (A) and (B), of at least one additive,
   wherein, in the graft (B2),
      i) the amount by weight of polymerized $\alpha$-methylstyrene units is greater than that of the polymerized styrene units,
      ii) the weight ratio of the polymerized $\alpha$-methylstyrene units or of the sum of polymerized $\alpha$-methylstyrene and styrene units to polymerized acrylonitrile units is from 60 : 40 to 90 : 10 and
      iii) the degree of grafting, defined as the weight of the graft (B2) as a proportion of the total weight of the graft polymer (B), multiplied by 100, is from 15 to 30.

2. A toughened thermoplastic polurethane molding material as claimed in claim 1, wherein the graft polymer (B) consists of
   B1) from 70 to 85% by weight of an elastomeric grafting base (B1) and
   B2) from 30 to 15% by weight of the graft (B2) produced in one stage or two stages,
   the percentages by weight being based on the total weight of B1) and B2).

3. A toughened thermoplastic polyurethane molding material as claimed in claim 1 or 2, wherein the elastomeric grafting base consists of a homopolymer of 1,3-butadiene or a copolymer of 1,3-butadiene and at least one olefinically unsaturated monomer selected from the group consisting of isoprene, styrene and alkyl methacrylates where the alkyl radical is from 1 to 8 carbon atoms.

4. A toughened thermoplastic polyurethane molding material as claimed in any of claims 1 to 3, wherein the thermoplastic polyurethane elastomers (A) are prepared by reacting
   a) aromatic diisocyanates with
   b) essentially linear polyhydroxy compounds having a molecular weight of from 500 to 8,000 and
   c) 1,4-butanediol
   in amounts such that the ratio of the number of equivalents of NCO groups of the organic diisocyanates (a) to the sum of the hydroxyl groups of the components (b) and (c) is from 0.3 : 1.0 to 1.2 : 1.0.

5. A toughened thermoplastic polyurethane molding material as claimed in any of claims 1 to 4, wherein the thermoplastic polyurethane elastomers (A) have a Shore D hardness of from 40 to 80 and are prepared by the belt process.

6. A process for the preparation of a toughened thermoplastic polyurethane molding material as claimed in any of claims 1 to 5 by melting the components (A) and (B) and, if required, (C) together in a conventional mixing apparatus at from 160 to 250 °C and in a residence time of from 0.5 to 10 minutes.

7. A process for the preparation of a toughened thermoplastic polyurethane molding material as claimed in any of claims 1 to 5, wherein the graft polymer (B) is emulsified or dispersed in at least one of the components (a) to (c), preferably (b), for the preparation of the thermoplastic polyurethane elastomers, and the components (a) to (c) modified in this manner are reacted in a manner known per se.

8. Use of a toughened thermoplastic polyurethane molding material as claimed in any of claims 1 to 5 for the production of injection molded parts.

9. A molding produced using a toughened polyurethane molding material as claimed in any of claims 1 to 5 as the essential component.

**Revendications**

1. Matières à mouler en polyuréthannes, thermoplastiques, modifiées de manière à les rendre résilientes, qui se composent de
   A) 70 à 99 parties en poids d'au moins un élastomère de polyuréthanne, thermoplastique (A),
   B) 1 à 30 parties en poids d'au moins un polymère de greffage (B), constitué de
      B1) un élastomère (B1) servant de base de greffage, formé d'un homopolymère du butadiène-1,3 ou d'un copolymère du butadiène-1,3, possédant une température de transition vitreuse inférieure à -40°C et
      B2) une enveloppe de greffage (B2), formée soit en un seul stade à partir d'un copolymère de l'$\alpha$-méthylstyrène et de l'acrylonitrile, ou de l'$\alpha$-méthylstyrène, du styrène et de l'acrylonitrile, soit en deux stades à partir de
         1) un homopolymère du styrène et
         2) un copolymère de l'$\alpha$-méthylstyrène et de l'acrylonitrile,
      où les parties pondérales de (A) et de (B) parachèvent 100 parties pondérales et
   C) 0 à 60% en poids, par rapport au poids de (A) et de (B) d'au moins un additif,
   caractérisé en ce que dans l'enveloppe de greffage (B2)
      i) la quantité pondéral en unités $\alpha$-méthylstyrène polymérisées est supérieure à celle des unités styrène polymérisées,
      ii) le rapport pondérale des unités $\alpha$-méthylstyrène polymérisées ou de la somme constituée des unités $\alpha$-méthylstyrène et styrène polymérisées par rapport aux unités acrylonitrile polymérisées varie de 60:40 à 90:10 et
      iii) le degré de greffage, défini comme la fraction pondérale de l'enveloppe de greffage (B2) à la masse globale du polymère de greffage (B), multipliée par 100, fluctue de 15 à 30.

2. Matières à mouler en polyuréthannes, thermoplastiques, modifiées de manière à les rendre résilientes, caractérisé en ce que le polymère de greffage (B) se compose de
   B1) 70 à 85% en poids d'une base de greffage caoutchoutoélastique (B1) et
   B2) 30 à 15% en poids de l'enveloppe de greffage (B2) préparée en un ou deux stades,
   où les pourcentages pondéraux se rapportent au poids global de B1) et B2).

3. Matières à mouler en polyuréthannes, thermoplastiques, modifiées de manière à les rendre résilientes suivant l'une quelconque des revendications 1 et 2, caractérisé en ce que la base de greffage caoutchoutoélastique se compose d'un homopolymère formé à partir du butadiène-1,3, ou d'un copolymère formé à partir du butadiène-1,3 et d'au moins un monomère oléfiniquement insaturé appartenant au groupe formé par l'isoprène, le styrène, ou des (méth)acrylates d'alkyle dont le radical alkyle comporte de 1 à 8 atomes de carbone.

4. Matières à mouler en polyuréthannes, thermoplastiques, modifiées de manière à les rendre résilientes suivant l'une quelconque des revendications 1 à 3, caractérisées en ce que les élastomères de polyuréthannes thermoplastiques (A) ont été préparés par la réaction
   a) de diisocyanates aromatiques et
   b) essentiellement des composés polyhydroxylés linéaires d'un poids moléculaire de 500 à 8000 et
   c) de butanediol-1,4,
   dans un rapport d'équivalence des radicaux NCO des diisocyanates organiques (a) à la somme des radicaux hydroxyle des composants (b) et(c) de 0,3:1,0 à 1,2:1,0.

5. Matières à mouler en polyuréthannes, thermoplastiques, modifiées de manière à les rendre résilientes suivant l'une quelconque des revendications 1 à 4, caractérisées en ce que les élastomères de polyuréthannes thermoplastiques (A) possèdent une dureté selon Shore D de 40 à 80 et ont été préparés selon le procédé à bande.

6. Procédé de préparation des matières à mouler en polyuréthannes, thermoplastiques, modifiées de manière à les rendre résilientes suivant l'une quelconque des revendications 1 à 5 par la fusion commune des composants (A) et (B), comme éventuellement aussi (C) dans une installation de mélange habituelle à une température qui se situe dans la plage de 160 à 250°C et pendant une durée de séjour de 0,5 à 10 minutes.

7. Procédé de préparation des matières à mouler en polyuréthannes, thermoplastiques, modifiées de manière à les rendre résilientes suivant l'une quelconque des revendications 1 à 5, caractérisé en ce que l'on émulsionne ou disperse le polymère de greffage (B) dans au moins l'un des composants constitutifs (a) à (c), de préférence (b), en vue de la préparation des élastomères de polyuréthannes thermoplastiques et on fait entrer en réaction de manière en soi connue les composants constitutifs (a) à (c) modifiés de cette manière.

8. Utilisation des matières à mouler en polyuréthannes, thermoplastiques, modifiées de manière à les rendre résilientes suivant l'une quelconque des revendications 1 à 5, en vue de la fabrication d'articles moulés par moulage par injection.

9. Articles moulés fabriqués en recourant à l'utilisation de matières à mouler en polyuréthannes, thermoplastiques, modifiées de manière à les rendre résilientes suivant l'une quelconque des revendications 1 à 5, à titre de composants constitutifs essentiels.